# EUROPEAN PATENT SPECIFICATION

(11) **EP 3 011 766 B1**
(45) Date of publication and mention of the grant of the patent: **09.08.2017**
(21) Application number: 14741389.2
(22) Date of filing: 19.06.2014
(51) Int. Cl.: H04W 4/00, H04L 29/08, H04W 28/02

(54) **MACHINE TYPE COMMUNICATION AGGREGATOR APPARATUS AND METHOD**
AGGREGATORVORRICHTUNG UND VERFAHREN FÜR MASCHINENARTIGE KOMMUNIKATION
PROCÉDÉ ET APPAREIL D'AGRÉGATION DE COMMUNICATIONS DE TYPE MACHINE

(30) Priority: 20.06.2013 US 201313922333
(43) Date of publication of application: 27.04.2016
(73) Proprietor: Telefonaktiebolaget LM Ericsson (publ), 164 83 Stockholm (SE)
(72) Inventor: GARY DAVID, Boudreau, Kanata, Ontario K2K 2K9 (CA); CIMPU, Virgil, Ottawa, Ontario K2G 6V2 (CA)
(74) Representative: Röthinger, Rainer
(86) International application number: PCT/IB2014/062455
(87) International publication number: WO 2014/203205

(56) References cited:
- US-A1- 2012 016 942
- US-A1- 2012 039 253
- US-A1- 2012 047 551
- US-A1- 2012 185 569
- US-A1- 2013 016 625
- STOJMENOVIC IVAN: "Machine-to-Machine Communications With In-Network Data Aggregation, Processing, and Actuation for Large-Scale Cyber-Physical Systems", IEEE INTERNET OF THINGS JOURNAL, IEEE, vol. 1, no. 2, 1 April 2014 (2014-04-01), pages 122-128, XP011547986, DOI: 10.1109/JIOT.2014.2311693 [retrieved on 2014-05-12]

## Description

### TECHNICAL FIELD

This application relates to machine type communications in general, and to a machine type communication aggregator apparatus and method, in particular.

### BACKGROUND OF THE APPLICATION

The growing demands on mobile networks to support data applications at higher throughputs and spectral efficiencies has driven the need to develop Orthogonal Frequency Division Multiplexing (OFDM) based 4th generation (4G) networks including for 3GPP Long Term Evolution (LTE). A key objective with respect to deployment of OFDM 4G networks is to utilize a frequency re-use of one (denoted by N=1), or as close to N=1 re-use as is practical. A frequency re-use of N=1 implies that the cells in basestations transmit on all available time-frequency resources blocks (RBs) simultaneously. The need for higher throughputs in 4G networks, especially near the cell edge, combined with the constraint on the uplink link budget will necessitate the need for smaller cell sizes than is typically deployed for present 2nd generation (2G) and 3rd generation (3G) cellular systems. The addition of smaller cells can be deployed in a traditional homogenous cell splitting approach or in a more ad hoc heterogeneous approach in which pico cells or relay nodes are overlaid on an existing macro cellular network. For both a homogeneous and heterogeneous approach, the resulting interference limited system for N=1 deployment will not achieve the full potential capacity that the LTE standard can support without the implementation at the basestation and mobile terminal of one or more viable interference mitigation and or cancellation techniques.

Machine-to-machine (M2M) or MTC type devices are an emerging area of mobile communications that is expected to grow significantly in the next several years with an expected compounded annual growth rate (CAGR) of > 25% in 2013.

US 2012/039253 A1 discloses a data processing method for a wireless communication system with a plurality of terminals, an intermediate device and a service network, the method comprising: sending a plurality of machine type communication (MTC) data flows from the plurality of terminals to the intermediate device; performing a data multiplexing operation by the intermediate device on the plurality of machine type communication data flows to generate a multiplexed data flow; and the service network receiving the multiplexed data flow.

US 2012/185569 A1 discloses a wireless communication system including a sensor configured to measure a characteristic and to transmit information indicative of the measured characteristic. The system includes a mobile device configured to receive and aggregate the information transmitted by the sensor, perform one or more tasks related to the aggregated information, determine whether a condition necessary for transferring a subset of the tasks is satisfied, and transfer the subset of the tasks for further performance. The system further includes a local gateway device configured to receive and aggregate the information indicative of the measured characteristic from the sensor and perform tasks related to the aggregated information, receive and perform the transferred subset of the tasks from the mobile device, and transfer the tasks for further performance.

US 2013/016625 A1 discloses a method of collecting data from wireless sensor units arranged in a mesh network, each wireless sensor unit having one or more sensors arranged on or below the ground surface for remote seismic recording, the method comprising: clustering the wireless sensor units into two or more sub mesh clusters, each sub mesh cluster having an aggregator assigned to the sub mesh cluster; acquiring data with the wireless sensor units by sensing one or more physical parameters; within each sub mesh cluster, each of the wireless sensor units transmitting the acquired data directly or indirectly to the respective aggregator; each aggregator aggregating at least a portion of the acquired data received from the wireless sensor units within the respective sub mesh cluster into aggregated data; and each aggregator transmitting the aggregated data to a base node.

It is desirable to find MTC solutions that ensure a clear business benefit to MTC UE vendors and operators for migrating low-end MTC UE's from GSM/GPRS to LTE networks.

The following references are incorporated herein by reference:
[1] 3GPP TS36.211, "E-UTRA Physical Channels and Modulation", v11.1
[2] 3GPP TS36.216, "E-UTRA Physical Layers for Relaying Operation," v10.3.
[3] 3GPP TR36.814, "E-UTRA Physical Layer Aspects", v9.0.

### SUMMARY

According to one broad aspect of the present application, there is provided a machine-type-communication aggregator apparatus in a communications network, the communications network having wireless communication nodes including wireless basestations serving wireless device, at least one of the wireless devices being an aggregator node for aggregating machine-type-communications between machine-type-communication devices and machine-type-communication servers, the aggregator node being served by a serving wireless basestation. The machine-type-communication aggregator apparatus includes a node in the communications network, comprising: a communications interface for participating in at least one machine-type-communication involving the aggregator node; a processor configured to operate with the communications interface, the processor adapted such that the at least one machine-type-communication involving the aggregator node has the effect of limiting the impact that the machine-type-communication devices have on the uplink between the aggregator node and the serving basestation. In some embodiments, the at least one machine-type-communication is a
portion of at least one of: a machine-type-communication aggregator start-up procedure, a procedure for a machine-type-communication device connection to an aggregator, an aggregator data collection procedure, a predefined mobility pattern based procedure with predefined machine-type-communication report times that are broadcast to the at least one machine-type-communication node, and a query based procedure for which machine-type-communication specific symbols are employed. In some embodiments, the node in the communications network is at least one of: a machine-type-communication device, the aggregator node, the serving basestation, an eNodeB, an MME, an Aggregator Manager, an S-GW, a P-GW, an MTC Management Server, and an MTC App Server. In some embodiments, the communications interface utilises at least one of: an aggregator radio access technology and a mobile network radio access technology. In some embodiments, at least one of the aggregator radio access technology and the mobile network radio access technology is LTE. In some embodiments, the communications interface uses at least one PCI of a serving eNodeB PCI and an aggregator PCI. In some embodiments, both the aggregator radio access technology and the mobile network radio access technology are LTE. In some embodiments, the aggregator radio access technology and the mobile network radio access technology use the different carriers. In some embodiments, the aggregator radio access technology carrier is narrow band and the mobile network radio access technology carrier is wideband. In some embodiments, the aggregator radio access technology is provided by one of a relay node and a mobile relay node. In some embodiments, the mobile relay node employs TDD with UL TDD configuration 0 and DL TDD configuration 5. In some embodiments, the aggregator radio access technology is one of WiFi and whitespace. In some embodiments, the aggregator radio access technology is WiFi using an SSID with a pattern. In some embodiments, the machine-type-communication aggregator start-up procedure includes at least one of the following: listening for other aggregators, RRC Conn, MTC Aggregator Notif, MTC Start Aggregation Service, MTC App Server List REQ, MTC App Server List RSP, RRC Disconn, and Aggregator Call Setup. In some embodiments, the procedure for a machine-type-communication device connection to an aggregator includes at least one of the following: MTC Conn Req, Authorize Server REQ, Authorize Server RSP, Authorize Device REQ, Authorize Device RSP, and MTC Conn RSP. In some embodiments, the at least one machine-type-communication include at least one of the following: MTC Data Report, Collection Period, RRC Conn, RRC Disconn, eMBMS broadcast predefined query times, MTC Data Report @T, MRN aggregated Data report, and CSI-RS, SR, grant @T. In some embodiments, the at least one machine-type-communication includes communication with machine-type-communication nodes using a predetermined pattern based on at least one of time and location. In some embodiments, the at least one machine-type-communication uses query based signalling based on coverage region of the machine-type-communication nodes. In some embodiments, machine-type-communication aggregator apparatus further includes a cache for storing the at least one machine-type-communication when the at least one machine-type-communication node is out of coverage. In some embodiments, the at least one machine-type-communication includes communication with machine-type-communication nodes using a default predetermined time assigned on eMBMS transmission. In some embodiments, the aggregator node is one of a root aggregator node and a node aggregator node.

According to another broad aspect of the present application, there is provide a machine-type-communication aggregator method in a communications network, the communications network having wireless communication nodes including wireless basestations serving wireless device, at least one of the wireless devices being an aggregator node for aggregating machine-type-communications between machine-type-communication devices and machine-type-communication servers, the aggregator node being served by a serving wireless basestation, the machine-type-communication aggregator method comprising: providing a node in the communications network, comprising and operating the node to limit the impact that the machine-type-communication devices have on the uplink between the aggregator node and the serving basestation. The node in the communication network includes a communications interface for participating in at least one machine-type-communication involving the aggregator node; a processor configured to operate with the communications interface, the processor adapted such that the at least one machine-type-communication involving the aggregator node. The present invention is defined by the claims. Other aspects and features of the present application will become apparent to those ordinarily skilled in the art upon review of the following description of specific embodiments of a type communication aggregator apparatus and method in conjunction with the accompanying drawing figures.

### BRIEF DESCRIPTION OF THE DRAWINGS

Embodiments of the present application will now be described, by way of example only, with reference to the accompanying drawing figures, wherein:
FIG. 1 is a block diagram illustrating an MTC Architecture;
FIG. 2 is a signalling flow diagram illustrating communication between MTC Devices and MTC App Servers
FIG. 3 is a block diagram illustrating an MTC network architecture using aggregators provided in accordance with embodiments of the present disclosure;
FIG. 4 is a signalling flow diagram illustrating MTC aggregator start-up procedure provided in accordance with embodiments of the present disclosure;
FIG. 5 is a signalling flow diagram illustrating a procedure for an MTC device connection to the aggregator provided in accordance with embodiments of the present disclosure;
FIG. 6 is a signalling flow diagram illustrating MTC aggregator data collection procedure provided in accordance with embodiments of the present disclosure;
FIG. 7 is a signalling flow diagram illustrating the procedure of having a predefined mobility pattern with defined MTC report times that are broadcast to the MTC devices using eMBMS provided in accordance with embodiments of the present invention; and
FIG. 8 is a signalling flow diagram illustrating a query based procedure for which MTC specific CSI-RS are employed provided in accordance with embodiments of the present invention.

Like reference numerals are used in different figures to denote similar elements.

### DETAINED DESCRIPTION OF THE DRAWINGS

The following abbreviations are used in this specification:
- AM - Aggregator Manager
- CSI-RS - Channel State Information Reference Symbol
- DL - Down Link
- eNodeB - enhanced Node B (basestation)
- EPC - Enhanced Packet Core
- IP - Internet Protocol
- MBSFN - multicast broadband single frequency network
- MCS - Modulation and Coding Selection
- MME - Mobility Management Entity
- MRN - Mobile Relay Node
- MTC - Machine Type Communication
- PCI - Physical Cell Identity
- P-GW - Packet Data Network Gateway
- RAN - Radio Access Network
- S-GW - Serving Gateway
- UE - User Equipment
- UL - Up Link
- Un - air interface link from eNB to relay node
- Uu - air interface link from relay to UE
- UDP - User Datagram Protocol

The present disclosure is applicable to the Machine Type Communication (MTC) domain where information is collected by MTC Application servers from many devices distributed over large areas. To be cost effective in deploying and managing the MTC devices, it makes sense to use Mobile Networks, which are also referred to as wireless networks in the present disclosure. This disclosure uses the terms wireless and mobile interchangeably such that a wireless device or node can be understood to be the same as a mobile device or node.

The number of MTC Devices connected to Mobile Networks is expected to grow significantly and they will impact the performance of the mobile networks. This disclosure uses MTC and M2M interchangeably such that an MTC Device or node can be understood to be the same as an M2M Device or node.

The present disclosure may allow a large number of MTC devices to be connected to the mobile network and to limit the impact on the mobile network.

The number of MTC wireless devices connected to the network may grow significantly. The mobile networks may have to cope with the increased number of devices and the cost of managing the devices. This cost may include managing more devices at MME level, allocating individual IP addresses for each MTC device, managing increased number of GTP tunnels.

Many MTC devices are reporting data infrequently which means that for every data report the device has to go through a full connection request followed by a disconnect request. This may make the control plane signalling cost for establishing connections and tear them down the main mobile network bottleneck.

It is desirable to find MTC solutions that ensure a clear business benefit to MTC UE vendors and operators for migrating low-end MTC UE's from GSM/GPRS to LTE networks. Such benefits may include:
- Reducing RF component cost in the devices, including (for example) simplifications and reductions in support of bands/RATs/RF chains/antenna ports, transmission power, maximum channel bandwidth less than the maximum specified for respective frequency band, and support of half-duplex FDD mode;
- Methods for reducing the processing in the device, additionally considering baseband-RF conversion aspects, significantly lower peak data rate support, no support of spatial processing mode in uplink/downlink, and reduced radio protocol processing;
- Support of backwards compatibility with existing LTE networks;
- Support data rates equivalent to that supported by EGPRS including 118.4 Kbps and 59.2 Kbps.;
- Ensure that service coverage footprint of low cost MTC UE based on LTE is not any worse than the service coverage footprint of GSM/EGPRS MTC ;
- Ensure that overall power consumption is no worse than existing GSM/GPRS based MTC devices;
- Target operation of low-cost MTC UEs and legacy LTE UEs on the same carrier.
- Re-use the existing LTE/SAE network architecture;
- Solutions should be specified in terms of changes to the Rel 10 version of the specifications;
- Optimizations for both FDD and TDD mode shall be supported; and
- Low cost MTC device support limited mobility (e.g. no support of seamless handover; ability to operate in networks in different countries) and are low power consumption modules.

The present disclosure focuses on MTC applications that require data collection from many devices spread on large areas. The MTC typical application anatomy is assumed to be composed of:
- One or more MTC App Servers in the cloud that collect data from the distributed MTC devices; and
- Many distributed MTC devices that are responsible for data collection as well as executing commands from the server.

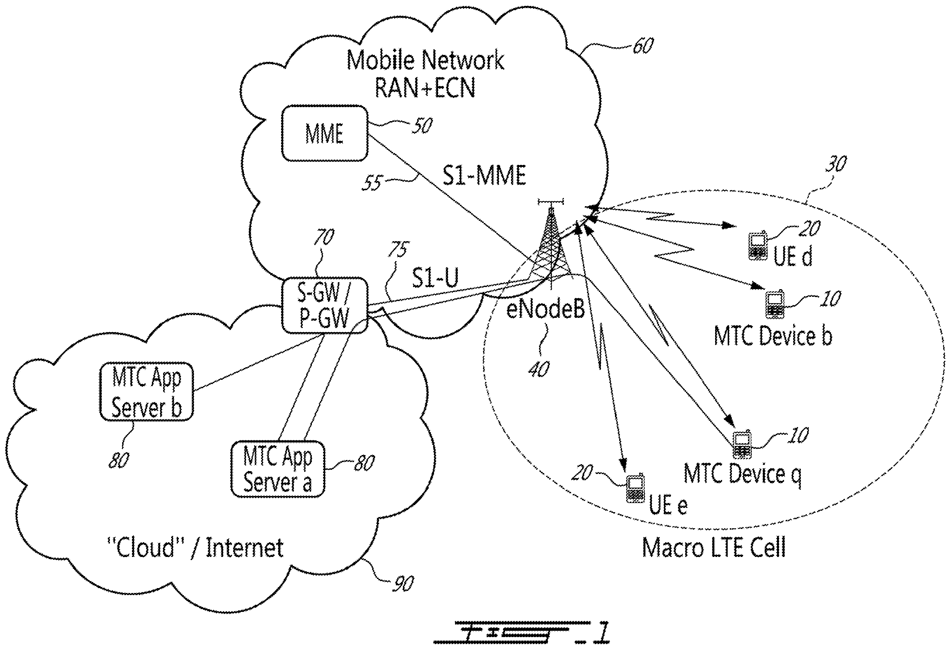

Referring to the drawings, FIG. 1 is a block diagram illustrating an MTC Architecture. As shown in FIG. 1, MTC Device 10a, MTC Device 10b, UE 20d and UE 20e are located in Macro LTE Cell 30 served by eNodeB 40 to which they are wirelessly connected via LTE. eNodeB 40 is connected to MME 50 via interface S1-MME 55. MME 50 is located in Mobile Network RAN+ECN 60. eNodeB 40 is also connected to S-GW/P-GW 70 via interface S1-U 75. S-GW/P-GW 70 acts as a gateway to "Cloud"/Internet 90 whereat MTC App Server 80a and MTC App Server 80b are located.

It is assumed that the MTC devices will have low throughput requirements and will communicate with the MTC application servers infrequently. The MTC devices will send data to the MTC servers at pre-determined time intervals (e.g. water meter sending data once a month to the application server; weather station sending data once an hour), on request from the MTC server (server requesting an unscheduled weather report) or when an event occurs (weather station reporting a power outage event).

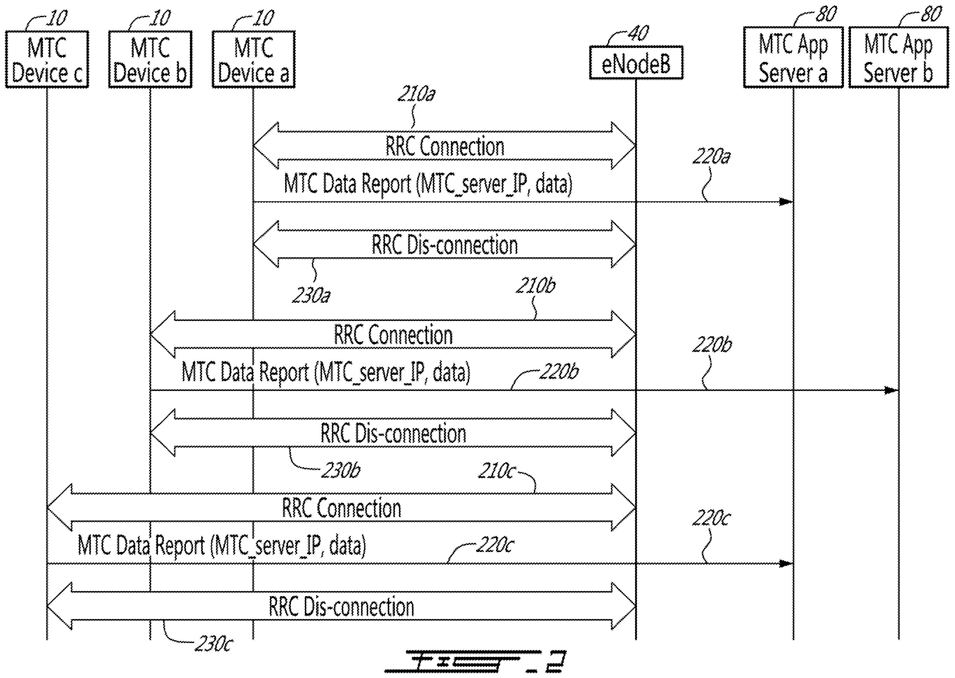

FIG. 2 is a signalling flow diagram illustrating communication between MTC Devices and MTC App Servers. As shown in FIG. 2, data reports MTC Data Report (MTC_server_IP, data) 230 a, b, c from MTC Devices 10 a, b, c require significant signalling overhead, to set up connections via RRC Conn. 210 a, b, c and tear down connections via RRC Disconn. 230 a, b, c, respectively, with MTC App Server 80a and MTC App Server 80b. It is noted that although only three MTC Devices 10 a, b, c and 2 MTC App Servers 80 a, b are shown for the sake of brevity, the amount of overhead is compounded by the presence of large numbers of MTC Devices and MTC App Servers.

The Mobile Networks (RAN+ECN) will have to cope with the increased number of MTC devices and with the increased signalling load that is characteristic for MTC devices. The introduction of MTC devices will change the ratio between the control data and user data and it will make the control signalling cost for establishing connections and tear them down the main Mobile Network bottleneck.

The present disclosure introduces a multi-tier network topology where some of the MTC devices will play a second role as data aggregators, consolidating data from several other nearby devices and hence reducing the impact on the mobile network. Different radio access technologies (RATs), like WiFi or LTE, can be used to aggregate data. Also different Radio Access Networks (RANs) can be used to connect the MTC aggregators to the MTC Application Server. Exemplary aspects of MACHINE TYPE COMMUNICATION AGGREGATOR APPARATUS AND METHOD are disclosed herein, including inter alia: (1) in the first aspect, the LTE Mobile Network that is used as the backhaul and LTE is also used for aggregator RAT; (2) in the second aspect, the LTE Mobile Network is used as the backhaul and WiFi is used for aggregator RAT; (3) in the third aspect, Mobile Relay based aggregation is used; and (4) in the fourth aspect, Multi-tier hierarchical aggregators are used.

Considering that a large numbers of MTC devices will be used in homes, like for example water meter, hydro meter, alarm systems, fridge, TV, temperature control, etc., it is reasonable to assume that there is a high probability that many of the MTC devices, belonging to different MTC applications, are located in the same proximity. Given the fact that part of the MTC devices connect to the servers at large time intervals and that they usually report low data volume, it would be desirable to aggregate the data from the devices before sending it to the servers in order to optimize the use of the mobile network.

This disclosure introduces the concept of the MTC aggregator that will collect data from MTC devices located in the aggregator's proximity and then it will forward the data to the MTC Application servers. In some embodiments, the MTC Application Servers will have the added responsibility of managing and authenticating the MTC devices, and will be identified as MTC Management Servers. In other embodiments, the MTC Management Servers and MTC Application Servers will be distinct.

The aggregator does more than just providing a proxy between the MTC devices and the MTC servers:
- To limit the number of accesses to the mobile network, it collects data over time and sends it to the MTC Management Servers at the end of collection period; and
- It hides the presence of the MTC devices from the mobile network, hence reducing the number of UEs managed by the mobile network.

Although the MTC aggregator could be a separate network node, it is expected that one of the MTC device will assume a second role as a MTC aggregator while still performing its original MTC device role.

Different RATs, like WiFi or LTE, can be used between the aggregator and the MTC devices to collect data. Also different RATs can be used as backhaul to connect the MTC aggregators to the MTC Management Servers.

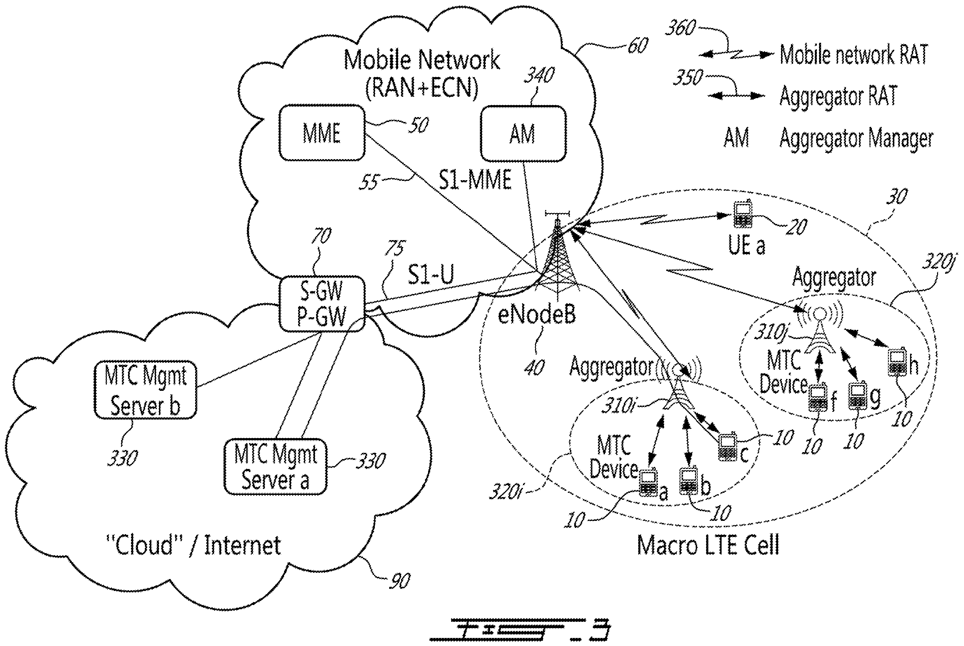

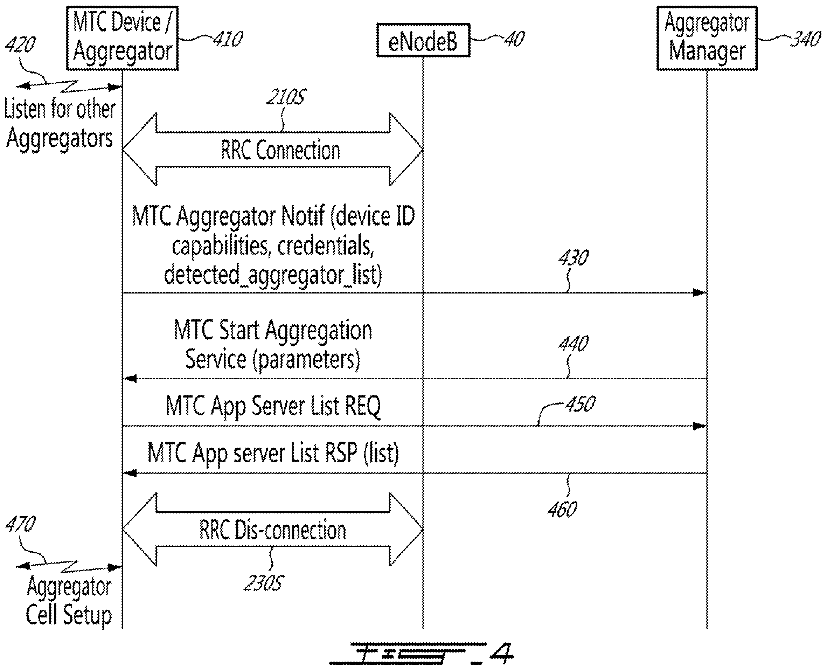

FIG. 3 is a block diagram illustrating an MTC network architecture using aggregators provided in accordance with embodiments of the present disclosure. As shown in FIG. 4, MTC Devices 10 a, b, c, f, g, h and UE 20 d are located in Macro LTE Cell 30 served by eNodeB 40. UE 20 d is wirelessly connected via LTE, an instance of a Mobile Network RAT, directly to eNodeB 40, an instance of a mobile network basestation. However MTC Devices a, b, c are now connected to eNodeB 40 via Aggregator RAT 350 to Aggregator 310i and MTC Devices f, g, h are now connected to eNodeB 40 via Aggregator RAT 350 to Aggregator 301j. This is because MTC Devices a, b, c are in proximity to Aggregator 310i within an Aggregator cell 320i and because MTC Devices f, g, h are in proximity to Aggregator 310j within an Aggregator cell 320j. Aggregators 310i and 310j are in turn wirelessly connected via LTE directly to eNodeB 40. eNodeB 40 is connected to MME 50 via interface S1-MME 55. MME 50 is located in Mobile Network RAN+ECN 60. eNodeB 40 is also connected to S-GW/P-GW 70 via interface S1-U 75. S-GW/P-GW 70 acts as a gateway to "Cloud"/Internet 90 whereat MTC Mgmt Server 330a and MTC Mgmt 330b are located. In alternative embodiments MTC Mgt Servers 330a, b can be MTC App Servers with the added responsibility of authenticating the MTC Devices. eNodeB 40 is also connected to Aggregator Manager AM 340. In alternative embodiments, Aggregator RAT 350 may be LTE, WiFi or other communication technology suitable to the application.

The Aggregator Manager (AM) 340 is a node in the ECN side of the mobile network that will manage the Aggregators 310 i, j and will also contain the list of authorized MTC Management Servers 330 a, b. The AM could be co-located with the MME. Note that the description of the MTC aggregator architecture above and as illustrated in FIG. 3 defines a single layer of MTC aggregation to the aggregator. However multiple levels of aggregation can also be defined in which for example a second level aggregator, would aggregate multiple first level aggregators prior to backhauling the data to the serving eNB. Note that in some embodiments, depending on the RAT used, the Aggregator will have a different physical cell identity (PCI) from the serving eNB.

### Aspect 1: LTE Mobile Network is used as backhaul and LTE is also used for aggregator RAT

In some embodiments, the Aggregator will act like an LTE small-cell with a Closed Subscriber Group (CSG) made of only MTC devices. The Aggregator cell will not allow normal UEs to camp in the cell. There are 2 options:
- Option 1: Aggregator carrier can be different from the backhaul carrier
   i. In this case, it is recommended that the backhaul carrier to be wideband (20 MHz) while the aggregation carrier to be narrow band (1.4 or 3 MHz). For 3GPP release 10 implementations a multicarrier carrier aggregation approach can be employed in which both inter-carrier and intra-carrier aggregation can be employed as defined in [1]. It should also be noted that option 1 of the MTC aggregator implementation can be implemented as a type la relay as defined in [2] and [3].
   ii. The advantage of this solution is that the MTC devices that are camped in the aggregator cell will not cause interference for the mobile network, but a dedicated spectrum may be needed for the aggregator cell.
- Option 2: Aggregator carrier is the same as the backhaul carrier i. In this case the Aggregator cell will behave similar to a relay node with small differences that will allow the MTC Application servers to act as MMEs and S-GWs. The advantage of this option is that the spectrum of the donor cell will be reused, but the MTC devices may create interference for the UE mobiles connected to the donor cell.

To allow MTC devices to easily identify the aggregator cells, a subset of the cell IDs will be reserved for the aggregator cells.

Option 2 can be implemented with the aggregator being implemented as a Type 1b relay node that employs inband backhaul for communication with the serving eNB. Transmissions from the eNB to the aggregator can be configured as MBSFN transmissions and will be subject to the TDD eNB to relay (e.g. Un link) and relay to UE (e.g. Uu link) restrictions of Type 1b relay node transmissions as defined in [2].

### Aspect 2: LTE Mobile Network is used as backhaul and WiFi is used for aggregator RAT

The main advantage is that the MTC devices will use unlicensed spectrum to connect to the aggregator.

To allow MTC devices to easily identify the aggregator, in some embodiments, the Aggregator's WiFi SSID will have a special pattern: "MTC_A_<Aggregator_ID>", where the Aggregator ID has several fields that will allow the MTC device to distinguish between aggregators, like a Mobile Network ID where the Aggregator is connected, a MTC Service Type ID that advertises what MTC devices should connect to the aggregator, etc.

Note that in addition to WiFi, other radio access technologies that are using unlicensed spectrum can be used, like for example the white spaces.

The procedures illustrated in FIG. 4, FIG. 5, and FIG. 6 apply to both Aspect 1 and Aspect 2 described above.

FIG. 4 is a signalling flow diagram illustrating MTC aggregator start-up procedure provided in accordance with embodiments of the present disclosure. When an MTC device that could perform an aggregator role starts up it will first listen for existing aggregators: MTC Device/Aggregator 410 listens for other aggregators 420 and compiles a list of detected aggregators or MTC devices (not shown in FIG. 4). The next step is to connect to the mobile network and to obtain an IP address: an RRC Conn. 210s sets up a connection between MTC Device/Aggregator 410 and eNodeB40. Then the MTC Aggregator/Device 410 will connect to the Aggregator Manager (AM) to announce that it can also perform an aggregator role: MTC Device/Aggregator 410 sends MTC Aggregator Notif (device ID capabilities, credentials, detected aggregator list) 430 to Aggregation Manager 340. The potential aggregator will include in the message to AM its capabilities (e.g. the RAT it can use for aggregation, the band, etc) the cell id where it is connected, the position if it is available and the list of other detected aggregators. If the AM decides that a new aggregator is required in the specified cell to off-load the MTC devices, it will ask the aggregator to start the aggregation service and it will provide information like the cell id to use or the SSID, the carrier, etc.: Aggregation Manager 340 responds to MTC Device/Aggregator 410 with MTC Start Aggregation Service (parameters) 440. Alternatively, although not shown in FIG. 4, if the AM decides that no new aggregator is required, it will inform the MTC device to use the services of existing aggregators, and in this case, the MTC device will disconnect from the mobile network and it will connect to other aggregators. Continuing with FIG. 4, The AM will also provide the list of authorized MTC application servers in response to a request: MTC Device/Aggregator 410 sends MTC App Server List REQ 450 to Aggregator Manager 340 and Aggregator Manager 340 sends MTC App Server List RSP (list) 460 to MTC Device Aggregator 410. An RRC Disconn. 230s tears down the connection between MTC Device Aggregator 410 and eNodeB 40. Aggregator Cell Setup 470 occurs whereby other aggregators/MTC devices are aggregated by MTC Device/Aggregator 410.

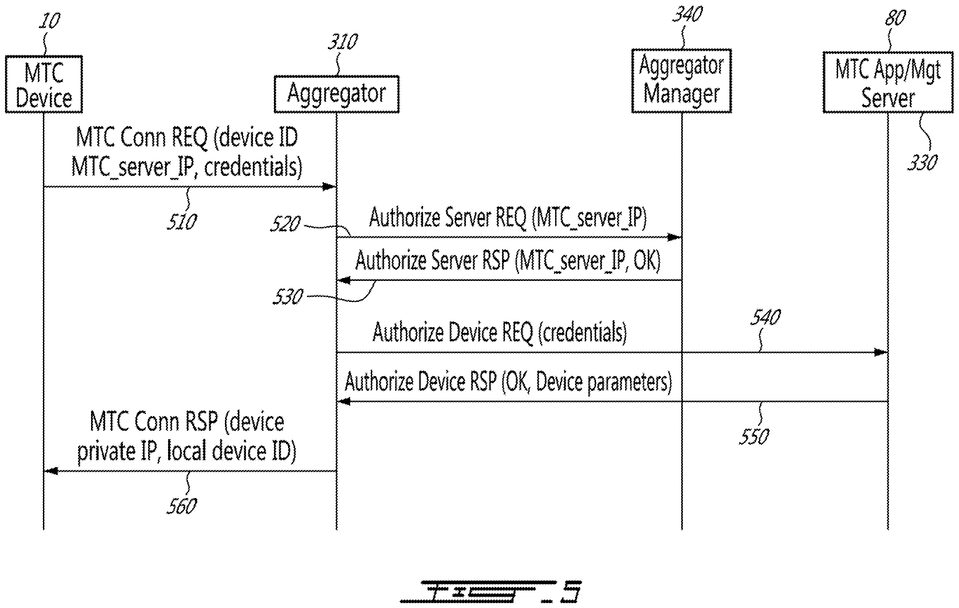

FIG. 5 is a signalling flow diagram illustrating a procedure for an MTC device connection to the aggregator provided in accordance with embodiments of the present disclosure. An MTC Device 10 will try to connect to an Aggregator cell first. Although not shown in FIG. 5, if the MTC device 10 doesn't see any aggregator 310, it will switch to an available and detectable eNB 40 and connect to the mobile network as a usual UE. Continuing with FIG. 5, if an aggregator cell is found, the MTC device 10 will initiate a connect request by sending an MTC Conn REQ (device_ID, MTC_server_IP, credentials) 510 to Aggregator 310 that will contain the IP of the MTC Mgt Server 330 that can authenticate the device and the MTC device 10 credentials. The aggregator 310 will first check that the MTC Mgt server 330 is an authorized one by sending Authorize Server REQ(MTC_Server_IP) 520 to the Aggregator Manager 340, and as shown in FIG. 5 the aggregator receives Authorize Server RSP (MTC_server_IP, OK) 530 indicating that the MTC Mgt Server 330 is authorized. Aggregator 310 then will request the MTC Mgt Server 330 to authenticate the MTC device 10 by sending Authorize Device REQ(credentials) 540 to the MTC Mgt Server 330 and by receiving Authorize Device RSP(OK, Device parameters) 550 in response. Once the MTC device 10 is authenticated, the Aggregator 310 will assign a local device ID and a private IP to the MTC device 10 by sending it MTC Conn RSP (device private IP, local device ID) 560.

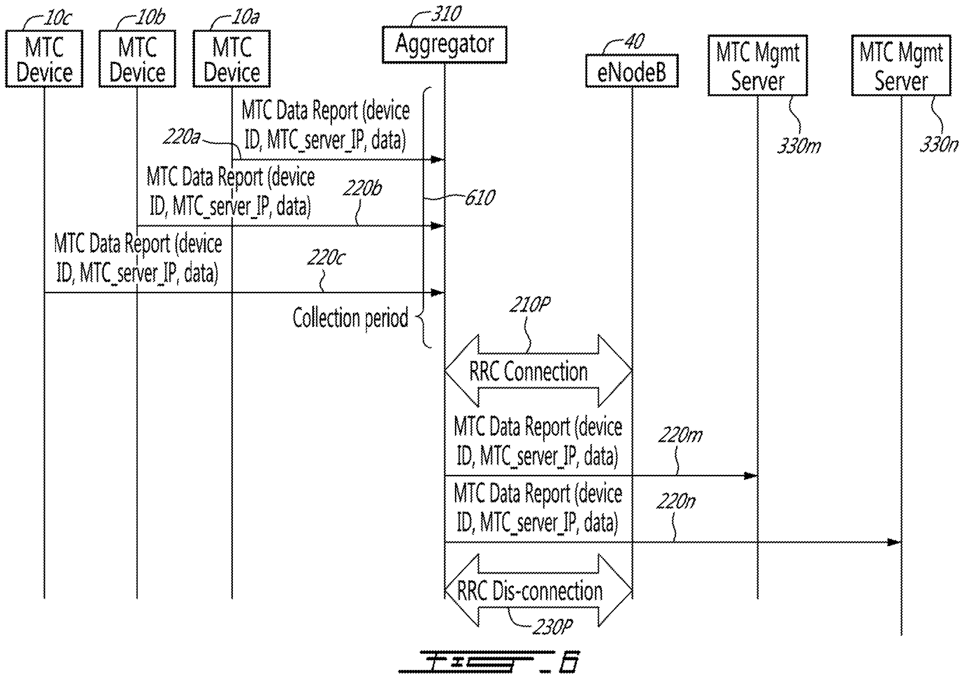

FIG. 6 is a signalling flow diagram illustrating MTC aggregator data collection procedure provided in accordance with embodiments of the present disclosure. MTC Devices 10 a, b, c sent MTC Data Report (device ID, MTC_server_IP, data) 220 a, b, c respectively to Aggregator 310. The Aggregator will collect data from the MTC devices during a collection period 610, then at the end of the collection period will send the aggregated data to the MTC Application servers 330 m, n by setting up a connection with eNodeB 40 at RRC Conn. 210p, sending MTC Data Report(device ID, MTC_server_IP, data) 220 m, n to MTC Mgmt Servers 330 m, n respectively, and tearing down the connection with eNodeB 40 at RRC Disconn. 230p. The collection period 610 will vary depending on the requirements of the MTC devices 10 a, b, c connected to the Aggregator 310. Although not shown in FIG. 6, if an urgent report is received from on of the MTC Devices 10 a, b, c, it will be forwarded immediately to the appropriate MTC Application Server 330 m, n by Aggregator 310.

### Aspect 3: Mobile Relay Node based Aggregation

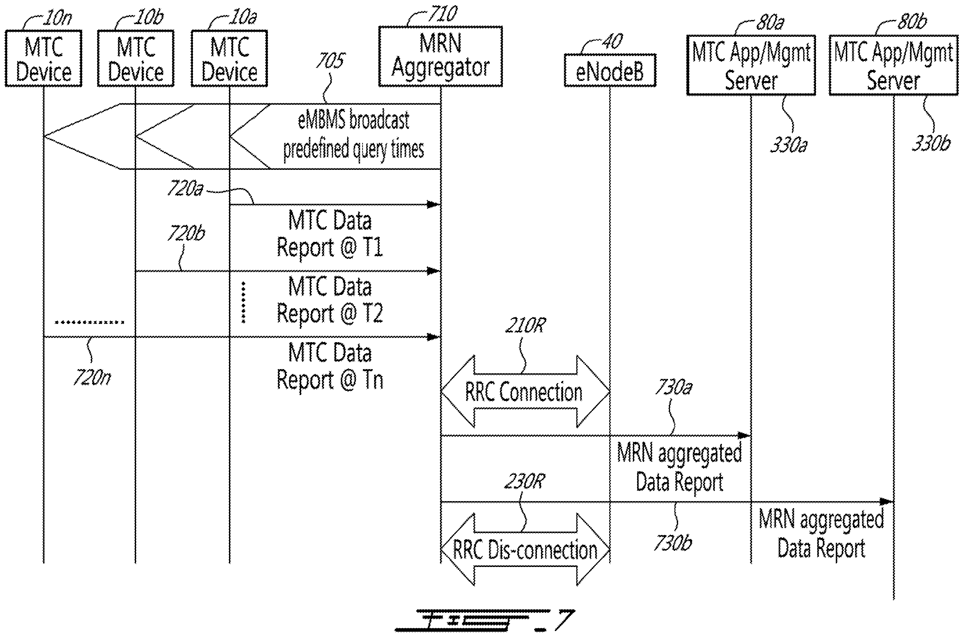

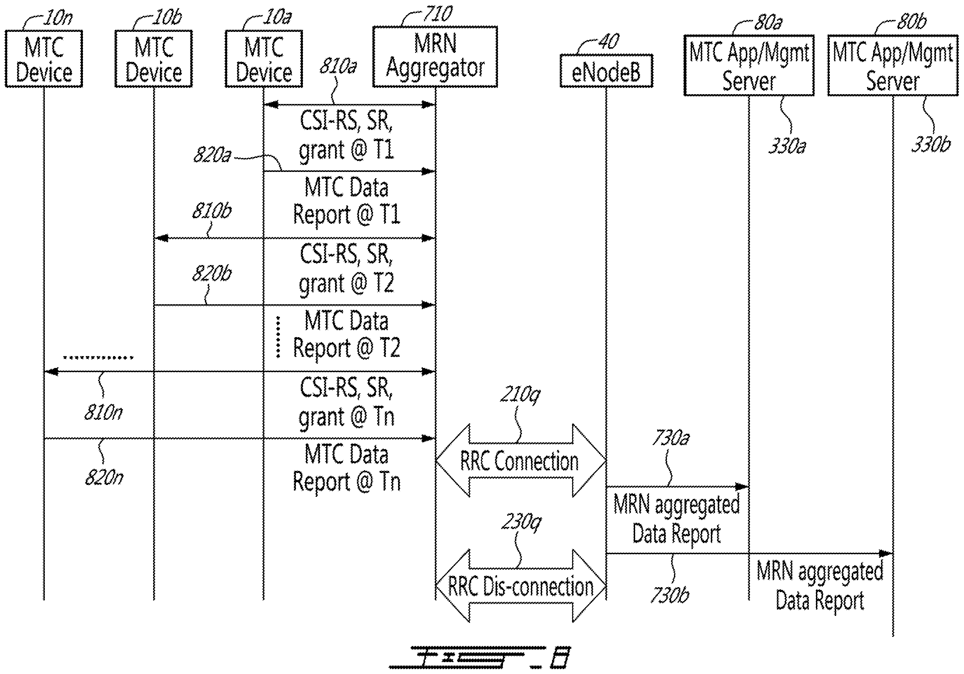

FIG. 7 is a signalling flow diagram illustrating the procedure of having a predefined mobility pattern with defined MTC report times that are broadcast to the MTC devices using eMBMS provided in accordance with embodiments of the present invention. FIG. 8 is a signalling flow diagram illustrating a query based procedure for which MTC specific CSI-RS are employed provided in accordance with embodiments of the present invention.

According to this aspect, mobile relay nodes assume the role of an aggregator MRN Aggregator 710. The mobile relay node (MRN) acting as an aggregator 710, can communicate with the MTC devices 10 a, b, ... n through either a predefined mobility pattern to receive MTC reports with low power transmissions at predefined times and physical locations, such as eMBMS broadcast predefined query 705 and MTC Data Report @T1, 2, ... n 720 a, b, ... n shown in FIG. 7, or through query based signalling from the MRN 710 when it falls within the coverage region of the MTC devices 10 a, b, ... n, such as CSI-RS, SR, grant @ T1, 2, ... n 810 a, b, ... n and MTC Data Report @T1,2, ... n 820 a, b, .... n shown in FIG. 8. Such approaches allow the MTC devices 10 a, b, ... n to only transmit when required and to only transmit under conditions of very good geometry. This minimizes wakeup-time, transmit time and power requirements of the MTC devices 10 a, b, ... n as well as maximizes the spectral efficiency of the MTC device transmissions.

A MRN acting as an aggregator can also be defined as a mobile aggregator that goes in and out of the Mobile Network coverage area. An example would be an Aggregator installed on a vehicle that collected information from different wireless sensors located in the vehicle. While the aggregator is connected to the mobile network, it can report data as usual, and when the aggregator goes outside the mobile network coverage, it will cache data received from the sensors until it re-establishes connection to the network.

For the predefined mobility approach, the times and locations of transmissions will correspond to an area of high geometry between the MRN and the MTC device to be communicated with. The MRN can set up a multicast broadband single frequency network (MBSFN) for all of the MTC devices to be aggregated within a given time interval. The predefined times for the MTC data reports can be preconfigured to a default value when the MTC device is authenticated in the network (not shown in the Figures), or assigned by an eMBMS transmission on the downlink from the MRN (as shown in FIG. 7).

For both the predefined mobility and query based approaches of MRN to MTC communication, MTC devices within the MBSFN region can make use of MBSFN reference signals to detect on the DL, the presence of the MRN. Alternatively, the detection of good geometry can be achieved by use of MTC specific CSI RS transmissions to each MTC device in the MBSFN. Based on the measured geometry of the link between the MRN and the candidate MTC device, the MTC device will communicate the CQI to the MRN. Furthermore, based on the communicated CQI, the MRN will select the achievable MCS and provide the MTC device with a grant to communicate the MTC Data Report.

For TDD implementations of MRN aggregators, a further optimization can be achieved by employing TDD configuration 0 (as defined in [1]), on the uplink, which provides for 6 uplink subframes per frame and employing TDD configuration 5 (as defined in [1]) for DL transmissions, which allocates 8 DL subframes per frame.

### Aspect 4: Multi-tier hierarchical Aggregators

Since an MTC device connected to an Aggregator can be itself an aggregator, a tree-like multi-tier topology of hierarchical aggregators can be build. The Aggregator that is connected to the mobile network is called the root aggregator, while the other aggregators in the tree are called node aggregators. Such a hierarchical topology is very useful for extending the area where MTC devices can be deployed beyond the coverage of the mobile network, like building basements, underground tunnels, etc. For node aggregators, it makes sense to use unlicensed spectrum (for example WiFi) for both the backhaul carrier and aggregation carrier but on different frequencies/channels. Root aggregators in some embodiments would benefit from using LTE for the backhaul.

The embodiments of the various aspects this disclosure may help the Mobile Networks to cope with the increase in the number of MTC devices. This is achieved by introducing MTC Aggregators that will collect data from the near-by MTC devices. Some advantages of this approach are:
- Reduced number of MTC devices that have to be managed by mobile network (MME and S-GW). This includes:
   i. Reduced control plane signalling volume, including the number of RRC connections and releases, number of paging requests;
   ii. Reduced number of IP addresses allocated inside the mobile network;
   iii. Reduced number of GTP-U tunnels.
- Decrease cell resources allocated for MTC devices which will allow more cell capacity to be allocated to other types of UEs;
- The MRN approach to the MTC aggregator will also minimize wakeup and transmit times of the MTC devices as well as maximize MCS selection and hence the spectral efficiency of the data rate transmissions between the MTC devices and the aggregator; and
- Allows deployment of MTC devices in areas that are not covered by mobile networks (building basements, underground tunnels) as long as the area is covered by an Aggregator.

Embodiments of aspects this disclosure may allow data gathering from a large number of MTC devices with limited impact on the Mobile Network.

The above-described embodiments of the present application are intended to be examples only. Those of skill in the art may effect alterations, modifications and variations to the particular embodiments without departing from the scope of the application, which is set forth in the claims.

## Claims

1. A machine-type-communication, MTC, aggregator apparatus in a communications network, the communications network having wireless communication nodes including wireless basestations (40) serving wireless devices (10, 20, 310, 310i, 310j, 710), at least one of the wireless devices being an aggregator node (310, 310i, 310j, 710) for aggregating machine-type-communications between machine-type-communication devices (10, 10a, 10b, 10n) and machine-type-communication servers (330, 330a, 330b), the aggregator node (310, 310i, 310j, 710) being served by a serving wireless basestation (40), the machine-type-communication aggregator apparatus comprising:
a node in the communications network, comprising:
a communications interface for participating in at least one machine-type-communication involving the aggregator node (310, 310i, 310j, 710), the aggregator node collecting data from MTC devices located in the aggregator node's proximity;
a processor configured to operate with the communications interface, the processor adapted such that the at least one machine-type-communication involving the aggregator node (310, 310i, 310j, 710) has the effect of limiting the impact that the machine-type-communication devices (10, 10a, 10b, 10n) have on the uplink between the aggregator node (310, 310i, 310j, 710) and the serving basestation (40) by causing the aggregator node (310, 310i, 310j, 710), during a start-up procedure, to listen (420) for existing aggregators, to connect to an aggregator manager (340) of the communications network, to announce to the aggregator manager (340) that it can also perform an aggregator role, and to start an aggregation service if the aggregator manager (340) decides and replies that a new aggregator is required in a specified cell to off-load the machine-type-communication devices (10, 10a, 10b, 10n).

2. The machine-type-communication aggregator apparatus of claim 1, wherein the at least one machine-type-communication is a portion of at least one of: a machine-type-communication aggregator start-up procedure, a procedure for a machine-type-communication device connection to an aggregator, an aggregator data collection procedure, a predefined mobility pattern based procedure with predefined machine-type-communication report times that are broadcast to the at least one machine-type-communication node, and a query based procedure for which machine-type-communication specific symbols are employed, and/or
wherein the node in the communications network is at least one of: a machine-type-communication device, the aggregator node, the serving basestation, an eNodeB, an MME, an Aggregator Manager, an S-GW, a P-GW, an MTC Management Server, and an MTC App Server.

3. The machine-type-communication aggregator apparatus of claim 1, wherein the communications interface utilises at least one of: an aggregator radio access technology and a mobile network radio access technology.

4. The machine-type-communication aggregator apparatus of claim 3, wherein at least one of the aggregator radio access technology and the mobile network radio access technology is LTE.

5. The machine-type-communication aggregator apparatus of claim 4, wherein the communications interface uses at least one PCI of a serving eNodeB PCI and an aggregator PCI.

6. The machine-type-communication aggregator apparatus of claim 4, wherein both the aggregator radio access technology and the mobile network radio access technology are LTE.

7. The machine-type-communication aggregator apparatus of claim 6, wherein the aggregator radio access technology and the mobile network radio access technology use the different carriers.

8. The machine-type-communication aggregator apparatus of claim 6, wherein the aggregator radio access technology carrier is narrow band and the mobile network radio access technology carrier is wideband.

9. The machine-type-communication aggregator apparatus of claim 6, wherein the aggregator radio access technology is provided by one of a relay node and a mobile relay node, and, optionally,
wherein the mobile relay node employs TDD with UL TDD configuration 0 and DL TDD configuration 5.

10. The machine-type-communication aggregator apparatus of claim 3, wherein the aggregator radio access technology is one of WiFi and whitespace, and, optionally,
wherein the aggregator radio access technology is WiFi using an SSID with a pattern.

11. The machine-type-communication aggregator apparatus of claim 2 wherein the machine-type-communication aggregator start-up procedure includes at least one of the following: listening for other aggregators, RRC Conn, MTC Aggregator Notif, MTC Start Aggregation Service, MTC App Server List REQ, MTC App Server List RSP, RRC Disconn, and Aggregator Call Setup, and/or
wherein the procedure for a machine-type-communication device connection to an aggregator includes at least one of the following: MTC Conn Req, Authorize Server REQ, Authorize Server RSP, Authorize Device REQ, Authorize Device RSP, and MTC Conn RSP, and/or
wherein the at least one machine-type-communication include at least one of the following: MTC Data Report, Collection Period, RRC Conn, RRC Disconn, eMBMS broadcast predefined query times, MTC Data Report @T, MRN aggregated Data report, and CSI-RS, SR, grant @T.

12. The machine-type-communication aggregator apparatus of claim 1 wherein the at least one machine-type-communication includes communication with machine-type-communication nodes using a predetermined pattern based on at least one of time and location, and/or
wherein the at least one machine-type-communication uses query based signalling based on coverage region of the machine-type-communication nodes.

13. The machine-type-communication aggregator apparatus of claim 1 further comprising a cache for storing the at least one machine-type-communication when the at least one machine-type-communication node is out of coverage, and/or
wherein the at least one machine-type-communication includes communication with machine-type-communication nodes using a default predetermined time assigned on eMBMS transmission.

14. The machine-type-communication aggregator apparatus of claim 1, wherein the aggregator node is one of a root aggregator node and a node aggregator node.

15. A machine-type-communication, MTC, aggregator method in a communications network, the communications network having wireless communication nodes including wireless basestations (40) serving wireless devices (10, 20, 310, 310i, 310j, 710), at least one of the wireless devices being an aggregator node (310, 310i, 310j, 710) for aggregating machine-type-communications between machine-type-communication devices (10, 10a, 10b, 10n) and machine-type-communication servers (330, 330a, 330b), the aggregator node (310, 310i, 310j, 710) being served by a serving wireless basestation (40), the machine-type-communication aggregator method comprising:
providing a node in the communications network, comprising:
a communications interface for participating in at least one machine-type-communication involving the aggregator node (310, 310i, 310j, 710), the aggregator node collecting data from MTC devices located in the aggregator node's proximity;
a processor configured to operate with the communications interface, the processor adapted such that the at least one machine-type-communication involving the aggregator node (310, 310i, 310j, 710); and operating the node to limit the impact that the machine-type-communication devices (10, 10a, 10b, 10n) have on the uplink between the aggregator node (310, 310i, 310j, 710) and the serving basestation (40) by causing the aggregator node (310, 310i, 310j, 710), during a start-up procedure, to listen (420) for existing aggregators, to connect to an aggregator manager (340) of the communications network, to announce to the aggregator manager (340) that it can also perform an aggregator role, and to start an aggregation service if the aggregator manager (340) decides and replies that a new aggregator is required in a specified cell to off-load the machine-type-communication devices (10, 10a, 10b, 10n).

## Patentansprüche

1. Aggregatorvorrichtung für maschinenartige Kommunikation, MTC, in einem Kommunikationsnetz, das Kommunikationsnetz umfassend kabellose Kommunikationsknoten beinhaltend kabellose Basisstationen (40), die kabellose Geräte (10, 20, 310, 310i, 310j, 710) bedienen, wobei zumindest eines der kabellosen Geräte ein Aggregatorknoten (310, 310i, 310j, 710) zum Aggregieren von maschinenartigen Kommunikationen zwischen Geräten für maschinenartige Kommunikation (10, 10a, 10b, 10n) und Servern für maschinenartige Kommunikation (330, 330a, 330b) ist, wobei der Aggregatorknoten (310, 310i, 310j, 710) durch eine bedienende kabellose Basisstation (40) bedient wird, die Aggregatorvorrichtung für maschinenartige Kommunikation Folgendes umfassend:
einen Knoten im Kommunikationsnetz, umfassend:
eine Kommunikationsschnittstelle zum Beteiligen an zumindest einer maschinenartigen Kommunikation umfassend den Aggregatorknoten (310, 310i, 310j, 710), wobei der Aggregatorknoten Daten von MTC-Geräten, die sich in der Nähe des Aggregatorknotens befinden, sammelt;
einen Prozessor, der zum Arbeiten mit der Kommunikationsschnittstelle konfiguriert ist, wobei der Prozessor so angepasst ist, dass die zumindest eine maschinenartige Kommunikation umfassend den Aggregatorknoten (310, 310i, 310j, 710) den Effekt hat, die Auswirkung zu beschränken, die die Geräte für maschinenartige Kommunikation (10, 10a, 10b, 10n) auf den Uplink zwischen dem Aggregatorknoten (310, 310i, 310j, 710) und der bedienenden Basisstation (40) haben, indem der Aggregatorknoten (310, 310i, 310j, 710) während eines Startverfahrens dazu gebracht wird, auf bestehende Aggregatoren zu horchen (420), sich mit einem Aggregator-Manager (340) des Kommunikationsnetzes zu verbinden, dem Aggregator-Manager (340) anzukündigen, dass er auch eine Aggregatorrolle ausführen kann, und einen Aggregierungsdienst zu starten, wenn der Aggregator-Manager (340) entscheidet und erwidert, dass ein neuer Aggregator in einer spezifizierten Zelle erforderlich ist, um die Geräte für maschinenartige Kommunikation (10, 10a, 10b, 10n) zu entladen.

2. Aggregatorvorrichtung für maschinenartige Kommunikation nach Anspruch 1, wobei die zumindest eine maschinenartige Kommunikation ein Teil von zumindest einem der Folgenden ist: ein Startverfahren für einen Aggregator für maschinenartige Kommunikation, ein Verfahren für eine Verbindung eines Geräts für maschinenartige Kommunikation zu einem Aggregator, ein Aggregatordatensammelverfahren, ein vordefiniertes mobilitätsmusterbasiertes Verfahren mit vordefinierten Berichtszeiten für maschinenartige Kommunikation, die an den zumindest einen Knoten für maschinenartige Kommunikation übertragen werden, und ein abfragebasiertes Verfahren, für das Symbole, die für maschinenartige Kommunikation spezifisch sind, verwendet werden, und/oder
wobei der Knoten im Kommunikationsnetz zumindest einer der Folgenden ist: ein Gerät für maschinenartige Kommunikation, der Aggregatorknoten, die bedienende Basisstation, ein eNodeB, ein MME, ein Aggregator-Manager, ein S-GW, ein P-GW, ein MTC-Managementserver und ein MTC-App-Server.

3. Aggregatorvorrichtung für maschinenartige Kommunikation nach Anspruch 1, wobei die Kommunikationsschnittstelle zumindest eines der Folgenden verwendet: eine Funkzugangstechnologie für einen Aggregator und eine Funkzugangstechnologie für ein mobiles Netz.

4. Aggregatorvorrichtung für maschinenartige Kommunikation nach Anspruch 3, wobei zumindest eine der Funkzugangstechnologie für einen Aggregator und der Funkzugangstechnologie für ein mobiles Netz LTE ist.

5. Aggregatorvorrichtung für maschinenartige Kommunikation nach Anspruch 4, wobei die Kommunikationsschnittstelle zumindest einen PCI eines bedienenden eNodeB-PCI und eines Aggregator-PCI verwendet.

6. Aggregatorvorrichtung für maschinenartige Kommunikation nach Anspruch 4, wobei sowohl die Funkzugangstechnologie für einen Aggregator als auch die Funkzugangstechnologie für ein mobiles Netz LTE sind.

7. Aggregatorvorrichtung für maschinenartige Kommunikation nach Anspruch 6, wobei die Funkzugangstechnologie für einen Aggregator und die Funkzugangstechnologie für ein mobiles Netz verschiedene Träger verwenden.

8. Aggregatorvorrichtung für maschinenartige Kommunikation nach Anspruch 6, wobei der Träger der Funkzugangstechnologie für einen Aggregator schmalbandig und der Träger für die Funkzugangstechnologie für ein mobiles Netz breitbandig ist.

9. Aggregatorvorrichtung für maschinenartige Kommunikation nach Anspruch 6, wobei die Funkzugangstechnologie für einen Aggregator durch einen von einem Relaisknoten und einem mobilen Relaisknoten bereitgestellt wird, und, gegebenenfalls,
wobei der mobile Relaisknoten TDD mit UL-TDD-Konfiguration 0 und DL-TDD-Konfiguration 5 verwendet.

10. Aggregatorvorrichtung für maschinenartige Kommunikation nach Anspruch 3, wobei die Funkzugangstechnologie für einen Aggregator eine von WiFi und White Space ist, und, gegebenenfalls,
wobei die Funkzugangstechnologie für einen Aggregator WiFi unter Verwendung einer SSID mit einem Muster ist.

11. Aggregatorvorrichtung für maschinenartige Kommunikation nach Anspruch 2, wobei das Startverfahren für einen Aggregator für maschinenartige Kommunikation zumindest eines der Folgenden umfasst: Horchen auf andere Aggregatoren, RRC Conn, MTC Aggregator Notif, MTC Start Aggregation Service, MTC App Server List REQ, MTC App Server List RSP, RRC Disconn und Aggregator Call Setup, und/oder
wobei das Verfahren für die Verbindung eines Geräts für maschinenartige Kommunikation zu einem Aggregator zumindest eines der Folgenden umfasst: MTC Conn Req, Authorize Server REQ, Authorize Server RSP, Authorize Device REQ, Authorize Device RSP und MTC Conn RSP, und/oder
wobei die zumindest eine maschinenartige Kommunikation zumindest eines der Folgenden umfasst: MTC Data Report, Collection Period, RRC Conn, RRC Disconn, eMBMS-Broadcastvordefinierte Abfragezeiten, MTC Data Report @T, MRNaggregierter Data Report und CSI-RS, SR, Grant @T.

12. Aggregatorvorrichtung für maschinenartige Kommunikation nach Anspruch 1, wobei die zumindest eine maschinenartige Kommunikation Kommunikation mit Knoten für maschinenartige Kommunikation unter Verwendung eines vordefinierten Musters basierend auf zumindest Zeit und Ort umfasst, und/oder
wobei die zumindest eine maschinenartige Kommunikation abfragebasierte Signalisierung basierend auf dem abgedeckten Bereich der Knoten für maschinenartige Kommunikation verwendet.

13. Aggregatorvorrichtung für maschinenartige Kommunikation nach Anspruch 1, ferner umfassend einen Cache zum Speichern der zumindest einen maschinenartigen Kommunikation, wenn der zumindest eine Knoten für maschinenartige Kommunikation außerhalb der Abdeckung ist, und/oder
wobei die zumindest eine maschinenartige Kommunikation Kommunikation mit Knoten für maschinenartige Kommunikation unter Verwendung einer standardmäßigen vorbestimmten Zeit, die bei eMBMS-Übertragung zugewiesen wird, umfasst.

14. Aggregatorvorrichtung für maschinenartige Kommunikation nach Anspruch 1, wobei der Aggregatorknoten einer von einem Stammaggregatorknoten und einem Knotenaggregatorknoten ist.

15. Aggregatorverfahren für maschinenartige Kommunikation, MTC, in einem Kommunikationsnetz, das Kommunikationsnetz umfassend kabellose Kommunikationsknoten beinhaltend kabellose Basisstationen (40), die kabellose Geräte (10, 20, 310, 310i, 310j, 710) bedienen, wobei zumindest eines der kabellosen Geräte ein Aggregatorknoten (310, 310i, 310j, 710) zum Aggregieren von maschinenartigen Kommunikationen zwischen Geräten für maschinenartige Kommunikation (10, 10a, 10b, 10n) und Servern für maschinenartige Kommunikation (330, 330a, 330b) ist, wobei der Aggregatorknoten (310, 310i, 310j, 710) durch eine bedienende kabellose Basisstation (40) bedient wird, das Aggregatorverfahren für maschinenartige Kommunikation Folgendes umfassend:
Bereitstellen eines Knotens im Kommunikationsnetz, umfassend:
eine Kommunikationsschnittstelle zum Beteiligen an zumindest einer maschinenartigen Kommunikation umfassend den Aggregatorknoten (310, 310i, 310j, 710), wobei der Aggregatorknoten Daten von MTC-Geräten, die sich in der Nähe des Aggregatorknotens befinden, sammelt;
einen Prozessor, der zum Arbeiten mit der Kommunikationsschnittstelle konfiguriert ist, wobei der Prozessor so angepasst ist, dass die zumindest eine maschinenartige Kommunikation den Aggregatorknoten (310, 310i, 310j, 710) umfasst; und Betreiben des Knotens, um die Auswirkung zu beschränken, die die Geräte für maschinenartige Kommunikation (10, 10a, 10b, 10n) auf den Uplink zwischen dem Aggregatorknoten (310, 310i, 310j, 710) und der bedienenden Basisstation (40) haben, indem der Aggregatorknoten (310, 310i, 310j, 710) während eines Startverfahrens dazu gebracht wird, auf bestehende Aggregatoren zu horchen (420), sich mit einem Aggregator-Manager (340) des Kommunikationsnetzes zu verbinden, dem Aggregator-Manager (340) anzukündigen, dass er auch eine Aggregatorrolle ausführen kann, und einen Aggregierungsdienst zu starten, wenn der Aggregator-Manager (340) entscheidet und erwidert, dass ein neuer Aggregator in einer spezifizierten Zelle erforderlich ist, um die Geräte für maschinenartige Kommunikation (10, 10a, 10b, 10n) zu entladen.

## Revendications

1. Appareil d'agrégation de communication de type machine, MTC, dans un réseau de communications, le réseau de communications ayant des noeuds de communication sans fil incluant des stations de base sans fil (40) desservant des dispositifs sans fil (10, 20, 310, 310i, 310j, 710), au moins un des dispositifs sans fil étant un noeud d'agrégation (310, 310i, 310j, 710) pour agréger des communications de type machine entre des dispositifs de communications de type machine (10, 10a, 10b, 10n) et des serveurs de communications de type machine (330, 330a, 330b), le noeud d'agrégation (310, 310i, 310j, 710) étant desservi par une station de base sans fil de desserte (40), l'appareil d'agrégation de communication de type machine comprenant :
un noeud dans le réseau de communications, comprenant :
une interface de communications pour participer à au moins une communication de type machine impliquant le noeud d'agrégation (310, 310i, 310j, 710), le noeud d'agrégation collectant des données de dispositifs MTC situés à proximité du noeud d'agrégation ;
un processeur configuré pour fonctionner avec l'interface de communications, le processeur adapté de sorte que l'au moins une communication de type machine impliquant le noeud d'agrégation (310, 310i, 310j, 710) a l'effet de limiter l'impact que les dispositifs de communication de type machine (10, 10a, 10b, 10n) ont sur la liaison montante entre le noeud d'agrégation (310, 310i, 310j, 710) et la station de base de desserte (40) en amenant le noeud d'agrégation (310, 310i, 310j, 710), durant une procédure de démarrage, à faire une écoute (420) pour des agrégateurs existants, à se connecter à un gestionnaire d'agrégation (340) du réseau de communications, à annoncer au gestionnaire d'agrégation (340) qu'il peut également exécuter un rôle d'agrégateur, et démarrer un service d'agrégation si le gestionnaire d'agrégation (340) décide et répond qu'un nouvel agrégateur est requis dans une cellule spécifiée pour décharger les dispositifs de communication de type machine (10, 10a, 10b, 10n).

2. Appareil d'agrégation de communication de type machine selon la revendication 1, dans lequel au moins une communication de type machine est une partie d'au moins une procédure parmi : une procédure de démarrage d'agrégateur de communication de type machine, une procédure pour une connexion d'un dispositif de communication de type machine à un agrégateur, une procédure de collecte de données d'agrégateur, une procédure basée sur un motif de mobilité prédéfini avec des temps de rapport prédéfinis de communication de type machine qui sont diffusés à l'au moins un noeud de communication de type machine, et une procédure basée sur une interrogation pour laquelle sont employés des symboles spécifiques de communication de type machine, et/ou
dans lequel le noeud dans le réseau de communications est au moins un de : un dispositif de communication de type machine, le noeud d'agrégation, la station de base de desserte, un eNodeB, une entité MME, un gestionnaire d'agrégation, une passerelle S-GW, une passerelle P-GW, un serveur de gestion de MTC et un serveur d'applications de MTC.

3. Appareil d'agrégation de communication de type machine selon la revendication 1, dans lequel l'interface de communications utilise au moins une de : une technologie d'accès radio d'agrégateur et une technologie d'accès radio de réseau mobile.

4. Appareil d'agrégation de communication de type machine selon la revendication 3, dans lequel au moins une technologie parmi la technologie d'accès radio d'agrégateur et la technologie d'accès radio de réseau mobile est une technologie LTE.

5. Appareil d'agrégation de communication de type machine selon la revendication 4, dans lequel l'interface de communications utilise au moins une identité de cellule physique, PCI, parmi une PCI d'eNodeB de desserte et une PCI d'agrégateur.

6. Appareil d'agrégation de communication de type machine selon la revendication 4, dans lequel à la fois la technologie d'accès radio d'agrégateur et la technologie d'accès radio de réseau mobile sont des technologies LTE.

7. Appareil d'agrégation de communication de type machine selon la revendication 6, dans lequel la technologie d'accès radio d'agrégateur et la technologie d'accès radio de réseau mobile utilisent des supports différents.

8. Appareil d'agrégation de communication de type machine selon la revendication 6, dans lequel le support de la technologie d'accès radio d'agrégateur est une bande étroite et le support de la technologie d'accès radio de réseau mobile est une large bande.

9. Appareil d'agrégation de communication de type machine selon la revendication 6, dans lequel la technologie d'accès radio d'agrégateur est fournie par un noeud parmi un noeud relais et un noeud relais mobile, et, éventuellement,
dans lequel le noeud relais mobile emploie TDD avec une configuration UL TDD 0 et une configuration DL TDD 5.

10. Appareil d'agrégation de communication de type machine selon la revendication 3, dans lequel la technologie d'accès radio d'agrégateur est une de WiFi et d'espace blanc, et, éventuellement,
dans lequel la technologie d'accès radio d'agrégateur est WiFi utilisant un SSID avec un motif.

11. Appareil d'agrégation de communication de type machine selon la revendication 2, dans lequel la procédure de démarrage d'agrégateur de communication de type machine inclut au moins un de ce qui suit : l'écoute d'autres agrégateurs, RRC Conn, MTC Aggregator Notif, MTC Start Aggregator Service, MTC App Server List REQ, MTC App Server List RSP, RRC Disconn, et Aggregator Call Setup, et/ou
dans lequel la procédure pour une connexion d'un dispositif de communication de type machine à un agrégateur inclut au moins un de ce qui suit : MTC Conn Req, Authorize Server REQ, Authorize Server RSP, Authorize Device REQ, Authorize Device RSP et MTC Conn RSP, et/ou
dans lequel l'au moins une communication de type machine inclut au moins un de ce qui suit : MTC Data Report, Collection Period, RRC Conn, RRC Disconn, temps d'interrogation prédéfinis de diffusion d'eMBMS, MTC Data Report @T, rapport MRN aggregated Data et CSI-RS, SR, octroi @T.

12. Appareil d'agrégation de communication de type machine selon la revendication 1, dans lequel l'au moins une communication de type machine inclut une communication avec des noeuds de communication de type machine à l'aide d'un motif prédéterminé sur la base d'au moins un temps et un emplacement, et/ou
dans lequel l'au moins une communication de type machine utilise une interrogation sur la base d'une signalisation basée sur une région de couverture des noeuds de communication de type machine.

13. Appareil d'agrégation de communication de type machine selon la revendication 1, comprenant en outre un cache pour stocker l'au moins une communication de type machine lorsque l'au moins un noeud de communication de type machine est en dehors de la couverture, et/ou
dans lequel l'au moins une communication de type machine inclut une communication avec des noeuds de communication de type machine à l'aide d'un temps prédéterminé par défaut attribué à une transmission d'eMBMS.

14. Appareil d'agrégation de communication de type machine selon la revendication 1, dans lequel le noeud d'agrégation est un noeud parmi un noeud d'agrégation racine et un noeud d'agrégateur de noeud.

15. Procédé d'agrégation de communication de type machine, MTC, dans un réseau de communications, le réseau de communications ayant des noeuds de communication sans fil incluant des stations de base sans fil (40) desservant des dispositifs sans fil (10, 20, 310, 310i, 310j, 710), au moins un des dispositifs sans fil étant un noeud d'agrégation (310, 310i, 310j, 710) pour agréger des communications de type machine entre des dispositifs de communications de type machine (10, 10a, 10b, 10n) et des serveurs de communications de type machine (330, 330a, 330b), le noeud d'agrégation (310, 310i, 310j, 710) étant desservi par une station de base sans fil de desserte (40), le procédé d'agrégation de communication de type machine comprenant :
la fourniture d'un noeud dans le réseau de communications, comprenant :
une interface de communications pour participer à au moins une communication de type machine impliquant le noeud d'agrégation (310, 310i, 310j, 710), le noeud d'agrégation collectant des données de dispositifs MTC situés à proximité du noeud d'agrégation ;
un processeur configuré pour fonctionner avec l'interface de communications, le processeur adapté de sorte que l'au moins une communication de type machine implique le noeud d'agrégation (310, 310i, 310j, 710) ; et utilisant le noeud pour limiter l'impact que les dispositifs de communication de type machine (10, 10a, 10b, 10n) ont sur la liaison montante entre le noeud d'agrégation (310, 310i, 310j, 710) et la station de base de desserte (40) en amenant le noeud d'agrégation (310, 310i, 310j, 710), durant une procédure de démarrage, à écouter (420) pour des agrégateurs existants, à se connecter à un gestionnaire d'agrégation (340) du réseau de communications, à annoncer au gestionnaire d'agrégation (340) qu'il peut également exécuter un rôle d'agrégateur, et à démarrer un service d'agrégation si le gestionnaire d'agrégation (340) décide et répond qu'un nouvel agrégateur est requis dans une cellule spécifiée pour décharger les dispositifs de communications de type machine (10, 10a, 10b, 10n).
